# EUROPEAN PATENT APPLICATION

(11) **EP 1 698 527 A1**
(43) Date of publication of application: **06.09.2006**
(21) Application number: 04806964.5
(22) Date of filing: 14.12.2004
(51) Int. Cl.: B60R 22/46, B60R 22/28, B60R 22/36

(54) **WEBBING TAKE-UP DEVICE**

(30) Priority: 16.12.2003 JP 2003417916
(71) Applicant: KABUSHIKI KAISHA TOKAI-RIKA-DENKI-SEISAKUSHO, Niwa-gun, Aichi-ken 480-0195 (JP)
(72) Inventor: TAKAMATSU, H. c/o K.K. TOKAI-RIKA-DENKI-SEISAKUSHO, Aichi 4800195 (JP); NAGATA, T., c/o K. K. TOKAI-RIKA-DENKI-SEISAKUSHO, Aichi 480-0195 (JP); KITAZAWA, Y., c/o K. K.TOKAI-RIKA-DENKI-SEISAKUSHO, Aichi 480-0195 (JP)
(74) Representative: Goddar, Heinz J.
(86) International application number: PCT/JP2004/018603
(87) International publication number: WO 2005/058658

(57) **Abstract**

This webbing retractor has a multi-function gear made as rock gear 70. Pretensioner mechanism 50 has sleeve 72 and sleeve extension 73. Sleeve 72 and sleeve extension 73 are integrally structured at an axial center of rock gear 70, a member of rock mechanism 130. Rock mechanism 130 has rock gear main body 74 and ratchet teeth 76.

## Description

### Technical Field

The present invention relates to a webbing retractor including a lock mechanism for restricting rotation of a retracting shaft for retracting an occupant restraint webbing belt in layers when a predetermined condition such as rapid deceleration of the vehicle is satisfied and a pretensioner mechanism.

### Background Art

As a retractor of a webbing belt mounted to a vehicle such as an automobile, there is one provided with a lock mechanism for restricting rotation of a retracting shaft of the webbing belt in a webbing pulling-out direction when a predetermined condition is satisfied. Because the lock mechanism needs a lock gear directly or indirectly coupled to the retracting shaft, the lock gear is provided to the retractor.

There is also a retractor provided with a pretensioner mechanism for forcibly retracting a predetermined amount of webbing belt under rapid deceleration and an example of it is disclosed in the following patent document 1. In the retractor having such a pretensioner mechanism, an intermediate body (sleeve) for directly or indirectly transferring rotary driving force from the pretensioner mechanism to the retracting shaft is required and therefore the sleeve is provided to the retractor.

However, if both the lock mechanism and pretensioner mechanism are provided to the retractor, the lock gear forming the lock mechanism and the sleeve forming the pretensioner mechanism are required separately, which results in a disadvantage that the number of parts increases. Moreover, there is a disadvantage that the retractor increases in size.

Patent Document 1: Japanese Patent Application Laid-open No. 6-156884

### Disclosure of the Invention

### Problems to be solved by the Invention

With the above problems in view, a webbing retractor reduced in the number of parts and size and including a lock mechanism and a pretensioner mechanism is desired.

### Means for Solving the Problems

According to an aspect of the present invention, there is provided a webbing retractor including a retracting shaft for retracting a webbing belt for restraining an occupant. The retractor further includes a lock mechanism having a lock gear formed at an outer peripheral face thereof with ratchet teeth and a lock plate disposed to be able to be engaged with the ratchet teeth of the lock gear. In the lock mechanism, the lock plate can be engaged with the lock gear under a predetermined condition to thereby prevent rotation of the retracting shaft in a webbing pulling-out direction. The webbing retractor further includes a force limiter mechanism having a torsion bar with one end portion coupled to the retracting shaft. The force limiter mechanism can absorb a rotating force of the retracting shaft in the webbing pulling-out direction when the rotation of the retracting shaft in the webbing pulling-out direction is prevented by the lock mechanism. The webbing retractor further includes a pretensioner mechanism having a sleeve coupled to the other end portion of the torsion bar. The pretensioner mechanism can forcibly rotate the retracting shaft in a webbing retracting direction through the sleeve under a predetermined condition. In the webbing retractor, the sleeve of the pretensioner mechanism is provided integrally at an axial center portion of the lock gear of the lock mechanism.

With the webbing retractor according to the present aspect of the invention, the one end portion of the torsion bar structuring the force limiter mechanism is coupled to the retracting shaft for retracting the webbing belt for restraining the occupant, and the sleeve structuring the pretensioner mechanism is coupled to the other end portion of the torsion bar.

In this webbing device, the pretensioner mechanism and the lock mechanism are actuated when a predetermined condition such as rapid deceleration of the vehicle is satisfied, for example.

If the pretensioner mechanism is actuated, a rotary driving force is applied to the retracting shaft through the sleeve coupled to the other end portion of the torsion bar. If the rotary driving force is applied to the retracting shaft by the pretensioner mechanism, the retracting shaft is forcibly rotated in the webbing retracting direction. As a result, the webbing belt is forcibly retracted by a predetermined amount and brought into close contact with a body of the occupant.

If the lock mechanism is actuated at the same time of actuation of the pretensioner mechanism, the lock plate is engaged with the lock gear to thereby prevent the rotation of the retracting shaft in the webbing pulling-out direction. In this way, pulling out of the webbing belt is prevented and the occupant is protected while being restrained in close contact by the webbing belt.

When the rotation of the retracting shaft in the webbing pulling-out direction is prevented by the lock mechanism, if tension is applied to the webbing belt due to inertial movement of the occupant, the rotating force in the webbing pulling-out direction is applied to the retracting shaft. Because this rotating force is absorbed by the torsion bar of the force limiter mechanism, it is possible to obtain perfect performance for protecting the occupant and to further improve the performance.

In the present webbing retractor, the sleeve of the pretensioner mechanism is provided integrally at the axial center portion of the lock gear of the lock mechanism. Therefore, one member can have two functions. As a result, it is possible to suppress the number of parts of the webbing retractor. Since the number of parts of the webbing retractor can be suppressed, it is possible to miniaturize the webbing retractor.

According to another aspect of the invention, there is provided a webbing retractor including a retracting shaft for retracting a webbing belt for restraining an occupant. The webbing retractor further includes a lock mechanism having a lock gear formed at an outer peripheral face thereof with ratchet teeth and a lock plate disposed to be able to be engaged with the ratchet teeth of the lock gear. In this lock mechanism, the lock plate can be engaged with the lock gear under a predetermined condition to thereby prevent rotation of the retracting shaft in a webbing pulling-out direction. The webbing retractor further includes a force limiter mechanism having a torsion bar with one end portion coupled to the retracting shaft. The force limiter mechanism can absorb a rotating force of the retracting shaft in the webbing pulling-out direction when the rotation of the retracting shaft in the webbing pulling-out direction is prevented by the lock mechanism. This webbing retractor further includes a pretensioner mechanism having a sleeve coupled to the other end portion of the torsion bar, a piston moving in the cylinder when it receives gas pressure, a rack provided to the piston and formed with a plurality of teeth along a moving direction of the piston, a pinion disposed coaxially with the retracting shaft and made to be engaged with the teeth of the rack to rotate as the piston moves, and a clutch plate for transferring a rotating force of the pinion to the sleeve. The pretensioner mechanism can forcibly rotate the retracting shaft in a webbing retracting direction through the sleeve under a predetermined condition. In the webbing retractor, the sleeve of the pretensioner mechanism is provided integrally at an axial center portion of the lock gear of the lock mechanism.

With the webbing retractor according to the present aspect of the invention, the one end portion of the torsion bar forming the force limiter mechanism is coupled to the retracting shaft for retracting the webbing belt for restraining the occupant, and the sleeve forming the pretensioner mechanism is coupled to the other end portion of the torsion bar.

In this webbing device, the pretensioner mechanism and the lock mechanism are actuated when a predetermined condition such as rapid deceleration of the vehicle is satisfied, for example.

If the pretensioner mechanism is actuated, the piston receives the gas pressure and moves within the cylinder. If the piston moves in this way, the pinion is engaged with the teeth of the rack provided at the piston and rotates. If the pinion rotates, the clutch plate transfers the rotating force of the pinion to the sleeve coupled to the other end portion of the torsion bar. As a result, a rotary driving force is applied to the retracting shaft through the sleeve. If the rotary driving force is applied to the retracting shaft by the pretensioner mechanism, the retracting shaft is forcibly rotated in the webbing retracting direction. As a result, the webbing belt is forcibly retracted by a predetermined amount and brought into close contact with a body of the occupant.

If the lock mechanism is actuated at the same time of actuation of pretensioner mechanism, the lock plate is engaged with the lock gear to thereby prevent the rotation of the retracting shaft in the webbing pulling-out direction. In this way, pulling out of the webbing belt is prevented and the occupant is protected while being restrained in close contact by the webbing belt.

When the rotation of the retracting shaft in the webbing pulling-out direction is prevented by the lock mechanism, if tension is applied to the webbing belt due to inertial movement of the occupant, the rotating force in the webbing pulling-out direction is applied to the retracting shaft. Because this rotating force is absorbed by the torsion bar of the force limiter mechanism, it is possible to obtain perfect performance for protecting the occupant and to further improve the performance.

In the present webbing retractor, the sleeve of the pretensioner mechanism is provided integrally at the axial center portion of the lock gear of the lock mechanism. Therefore, one member can have two functions. As a result, it is possible to suppress the number of parts of the webbing retractor. Since the number of parts of the webbing retractor can be suppressed, it is possible to miniaturize the webbing retractor.

### Effect of the Invention

As described above, the webbing retractor according to the invention can reduce the number of parts and miniaturize size thereof.

### Best Mode for Carrying out the Invention

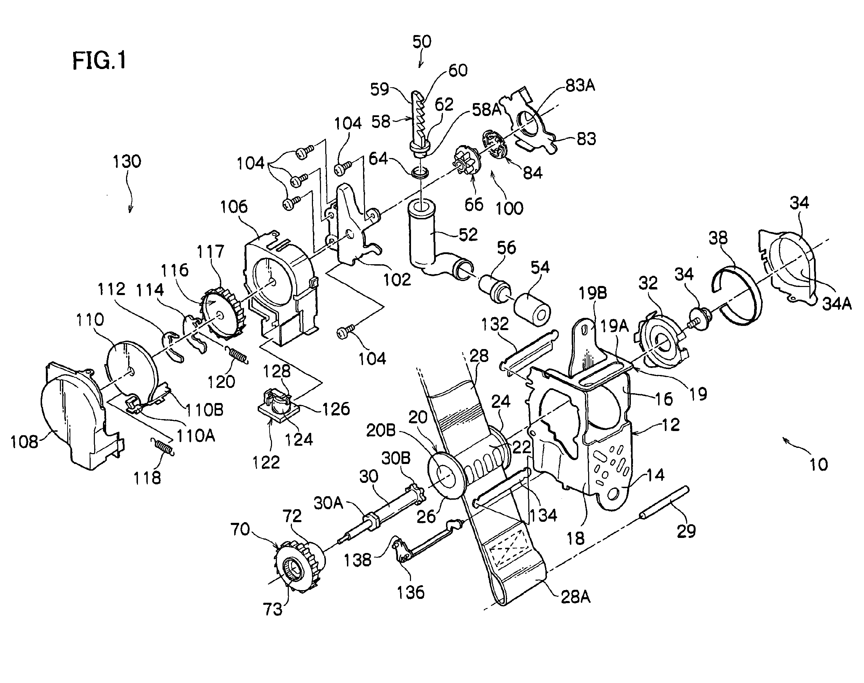

FIG. 1 is a schematic exploded perspective view of a webbing retractor 10 according to an embodiment of the present invention.

The webbing retractor 10 includes a frame 12. The frame 12 includes a back portion 14 formed in a plate shape. A lower end portion of the back portion 14 is fixed to a vehicle body by a bolt. Opposite end portions of the base 14 are integrally formed with leg portions 16, 18 of a pair extending parallel to each other. Therefore, the frame 12 is formed substantially in an angular U-shape in a top view.

Furthermore, a coupling piece 19 is bridged between upper end portions of the leg portions 16, 18 of the frame 12. The coupling piece 19 is formed with an insertion hole 19A through which a webbing belt 28 is inserted and a mounting portion 19B at which the frame 12 is fixed to the vehicle body by a bolt.

Bar supports 132, 134 are crimped onto upper and lower two positions of the leg portions 16, 18 of the frame 12 on an opposite side to the base 14 to thereby increase strength of the entire frame 12.

Between these leg portions 16, 18, a spool 20 as a retracting shaft is disposed. A central portion 22 of the spool 20 is in a substantially cylindrical shape. Through the central portion 22 of the spool 20, the webbing belt 28 is inserted while sidestepping an axial center portion of the spool 20. A base end portion of the webbing belt 28 is formed into an annular portion 28A by folding back an end portion of the long and belt-shaped belt and sewing the end portion on a neighboring area of the belt. A columnar shaft 29 is inserted through the annular portion 28A and is fitted on the central portion 22 of the spool 20. In other words, the base end portion of the webbing belt 28 is locked to the central portion 22 of the spool 20.

Therefore, the spool 20 rotates in one direction (hereafter referred to as "webbing pulling-out direction") about its axis as the webbing belt 28 is pulled out and the spool 20 rotates in a reverse direction to the pulling-out direction (hereafter referred to as "webbing retracting direction") to thereby retract the webbing belt 28 in layers.

Axial opposite end portions of the spool 20 are formed with a pair of flange portions 24 (end portion on a side of the leg portion 16), 26 (end portion on a side of the leg portion 18) formed in substantially disk shapes. Therefore, the entire spool 20 is substantially formed in a bobbin shape.

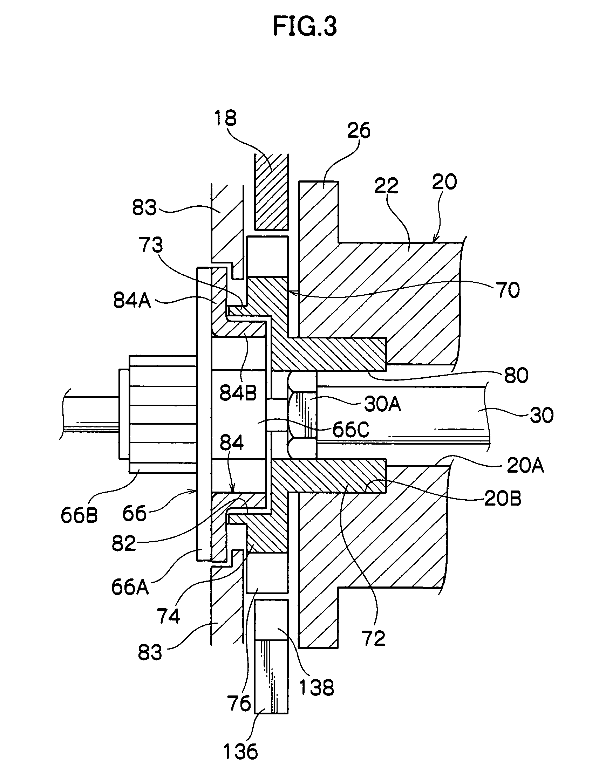

In the axial center portion of the spool 20, a fitting hole 20A and a sleeve receiving portion 20B communicating with the fitting hole 20A on the side of the leg portion 18 are formed (see FIG 3). In the fitting hole 20A, a torsion bar 30 integrally formed with a tail portion 30B and a head portion 30A formed in a shape of a head of a hexagonal-head bolt on the sides of the leg portions 16, 18 is inserted. The tail portion 30B of the torsion bar 30 is fitted in a fitting portion (not shown) formed substantially in a shape of a hexagonal hole in an end portion of the fitting hole 20A on the side of the leg portion 16. Therefore, the torsion bar 30 basically rotates together with the spool 20. The torsion bar 30 is coupled to the spool 20 while being prevented from withdrawing by an engaging member (not shown).

On the side of the leg portion 16 of the torsion bar 30, a spring seat 32 is disposed coaxially on an outside of the leg portion 16 of the frame 12 and is attached to the leg portion 16. Furthermore, on an opposite side of the spring seat 32 to the leg portion 16, a spring cover 34 is integrally mounted to the leg portion 16 in such a manner as to cover the spring seat 32.

On the leg portion 16 of the spring cover 34, a recessed portion 34A having a bottom and formed in a substantially cylindrical shape is formed. In the recessed portion 34A, an adaptor 34 formed substantially in a cylindrical body with a flange is disposed. The flange-shaped portion of the adaptor 34 faces the leg portion 16 of the frame 12 and an end portion (end portion on the side of the leg portion 16) of the above-described torsion bar 30 is integrally locked into an axial center portion of the adaptor 34 so as not to be able to rotate with respect to the adaptor 34.

Furthermore, in the recessed portion 34A of the spring cover 34, a spiral spring 38 is provided. An end of the spiral spring 38 is fixed to an outer peripheral portion of the adaptor 34. The other end of the spiral spring 38 is fixed to an inner peripheral wall of the recessed portion 34A of the cover spring 34. Therefore, if the spool 20 rotates in the webbing pulling-out direction, the spiral spring 38 is wound as the torsion bar 30 coupled to the spool 20 rotates and the torsion bar 30 is urged in the webbing retracting direction by this spiral spring 38.

On the leg portion 18 side of the torsion bar 30, a pretensioner mechanism 50 is provided. The pretensioner mechanism 50 includes a pipe-shaped cylinder 52. A generator cap 54 is in close contact with one end portion of the cylinder 52 with a gas generator 56 disposed between them to close the one end portion of the cylinder 52. In the gas generator 56, gunpowder is filled. The gas generator 56 is electrically connected to an acceleration sensor (not shown) through control means (not shown) and the control means is actuated based on a result of detection of the acceleration (deceleration) by this acceleration sensor to ignite the gunpowder.

In the other end portion of the cylinder 52, a piston 58 is inserted through an O-ring 64 to be able to extend. The piston 58 includes a shaft portion 58A formed into a columnar shape and inserted into the cylinder 52 and a rack 59 having a plurality of rack teeth 60 formed along an axial direction of the shaft portion 58A. At a boundary portion between the shaft portion 58A and the rack 59, a flange portion 62 substantially formed in a disc shape is formed to correspond to a shape of the O-ring 64. Therefore, the other end portion of the cylinder 52 is closed with this flange portion 62 under normal conditions. As a result, if gas is generated by the gas generator 56, the piston 58 protrudes from the cylinder 52 along the axial direction of the shaft portion 58A in response to pressure (gas pressure) of this gas.

The rack 59 is substantially formed in a rod shape which is long in the axial direction of the shaft portion 58A. The rack 59 is formed with the above-described plurality of rack teeth 60 in an extending direction of the piston 58 (i.e., the length direction of the rack 59). The rack teeth 60 of the rack 59 can be engaged with pinion teeth 66B of a pinion 66 disposed coaxially with the above-described torsion bar 30.

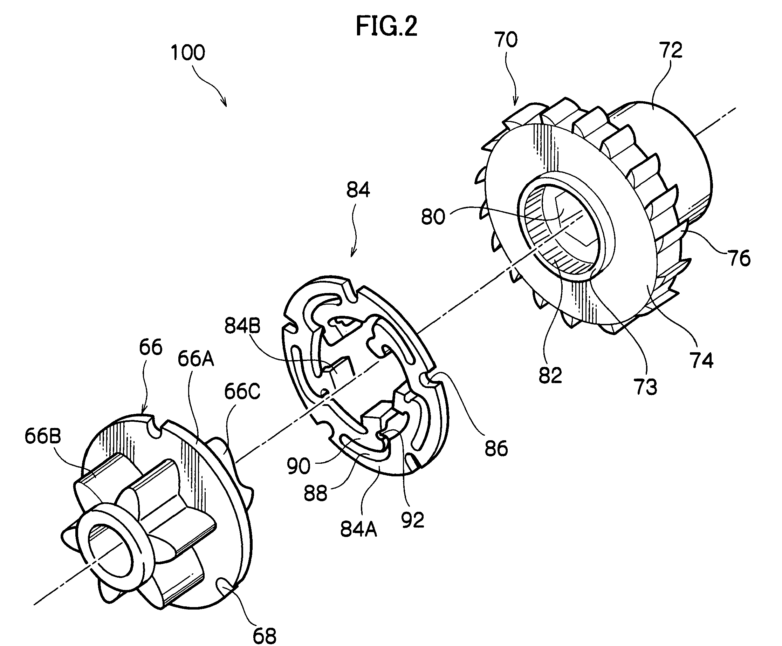

FIG 2 is an exploded perspective view of a clutch mechanism 100 forming the pretensioner mechanism 50 formed while including the pinion 66. FIG 3 is a sectional view of a state in which the clutch mechanism 100 is assembled. For convenience of explanation, a gear case 83 which will be described later is not shown in Fig. 2. The clutch mechanism 100 is structured with the pinion 66, a clutch plate 84, and a lock gear 70.

The lock gear 70 is structured with a cylindrical sleeve 72 fitted over the head portion 30A of the torsion bar 30 at the sleeve receiving portion 20B formed in the axial center portion of the spool 20, a sleeve extension portion 73 extending coaxially from the sleeve 72 and having a size larger diameter than the sleeve 72, a lock gear main body 74 integrally formed on an outer periphery of the sleeve extension portion 73, and a plurality of ratchet teeth 76 formed on an outer periphery of the lock gear main body 74.

The sleeve 72 is mounted in the sleeve receiving portion 20B of the spool 20 while being prevented from withdrawing. In the axial center portion of the sleeve 72, a fitting hole 80 in a shape of a hexagonal hole is formed. In the fitting hole 80 of the sleeve 72, the above-described head portion 30A of the torsion bar 30 is fitted so as not to be able to rotate relatively. Therefore, the sleeve 72 rotates integrally with the torsion bar 30. An inner peripheral face of the sleeve extension portion 73 is knurled throughout its circumference (hereafter referred to as a "knurled face 82"). These sleeve 72 and sleeve extension portion 73 correspond to the "sleeve".

The lock gear main body 74 is formed in a thick, flat, and annular shape and is formed coaxially and integrally with the sleeve extension portion 73. On an outer peripheral face of the lock gear main body 74, the ratchet teeth 76 are formed. Such a lock gear main body 74 cannot rotate with respect to the sleeve 72 and the sleeve extension portion 73 coupled to the torsion bar 30 and rotates together with the sleeve 72 and the sleeve extension portion 73.

The above-described pinion 66 includes a relatively thin base portion 66A. At an outer peripheral edge of the base portion 66A, a plurality of notches 68 are formed. On one side (on a side of the pretensioner mechanism 50) of the base portion 66A, pinion teeth 66B which can be engaged with the rack teeth 60 of the rack 59 are formed integrally with the base portion 66A. Furthermore, on a side of the base portion 66A opposite to the pinion teeth 66B, a windmill-shaped cam 66C coaxial with the pinion teeth 66B is formed integrally with the base portion 66A. This cam 66C is formed with such a diameter and a height (axial dimension) that it can be inserted into the sleeve extension portion 73 of the lock gear 70. When the pretensioner mechanism 50 is assembled, the cam 66C is inserted into the sleeve extension portion 73 and faces the knurled face 82.

The clutch plate 84 is disposed between the above-described pinion 66 and lock gear 70. The clutch plate 84 is structured with a base plate portion 84A formed in a flat and annular shape and a plurality of rising portions 84B rising at predetermined intervals from an inner periphery of this base plate portion 84A. At an outer peripheral portion of the base plate portion 84A, notches 86 corresponding to the notches 68 of the pinion 66 are formed at predetermined intervals. With positions of these notches 68, 86 facing each other in the axial direction of the clutch plate 84 and the pinion 66, shear pins (not shown) rising from the leg portion 18 are inserted into the notches 68, 86 to thereby retain the clutch plate 84 with the pinion 66 aligned with the clutch plate 84 in a circumferential direction.

The base plate portion 84A of the clutch plate 84 is formed with clipped portions 88 in a radial intermediate portion of the base plate portion 84A and extending along a circumferential direction of the base plate portion 84A. Each clipped portion 88 is substantially formed in an L shape. As a result, arm portions 90 extending along the circumferential direction are formed inside an outer peripheral edge of the base plate portion 84A. A base end portion of each arm portion 90 is a fixed end integral with the outer peripheral edge of the base plate portion 88A and a tip end portion of each arm portion 90 is a free end integral with the above-described rising portion 84B. An outer peripheral face of each rising portion 84B is formed with a plurality of stripe protrusions (not shown) to be engaged with the knurled face 82 of the sleeve extension portion 73.

A portion (base end portion of the rising portion 84B) where the rising portion 84B and the arm portion 90 are connected is notched from opposite sides to form a constricted portion 92. As a result, the portion formed with the constricted portion 92 has a lower rigidity than other portions.

Such a clutch plate 84 is fitted over the cam 66C of the pinion 66 while aligned with the cam 66C in a circumferential direction. In this state, a standing face of the cam 66C faces a side face of one of the rising portions 84B. An inclined face of the cam 66C faces a side face of the other rising portion 84B adjacent to the above-described rising portion 84B.

The rising portions 84B of the clutch plate 84 are inserted in the sleeve extension portion 73 of the lock gear 70. In an assembled state of the clutch plate 84, projections of the rising portions 84B face the knurled face 82 of the sleeve extension portion 73. Therefore, under normal conditions, rotating force of the lock gear 70 is not transferred to the clutch plate 84 and the clutch plate 84 does not rotate when the lock gear 70 rotates.

Between the clutch plate 84 and the lock gear 70, a gear case 83 is provided. The gear case 83 is formed with an insertion hole 83A through which the flange extension portion 73 of the lock gear 70 is inserted. Such a gear case 83 is attached to an outside (the side of the pretensioner mechanism 50) of the leg portion 18 of the frame 12 while covering the lock gear 70. Moreover, on a side of the clutch mechanism 100 opposite to the leg portion 18, a cover plate 102 is provided and fixed to the outside of the leg portion 18 by screws 104 while retaining the pretensioner mechanism 50.

On a side of the cover plate 102 opposite to the leg portion 18, a lock mechanism 130 is provided. The lock mechanism 130 includes a sensor holder 106 retained by the leg portion 18 and a sensor cover 108 attached to the leg portion 18 from a side of the sensor holder 106 opposite to the leg portion 18. The sensor holder 106 and the sensor cover 108 are respectively formed with recessed portions at their portions facing each other. In a clearance formed by these recessed portions, a V gear 116, a W pawl 114, a W mass 112, a gear sensor 110, and an acceleration sensor 124 are provided.

At a lower portion of the sensor holder 106 on an opposite side to the leg portion 18, an acceleration sensor 124 is disposed. The acceleration sensor 124 includes a spherical body 122, a mount portion 126 on which the spherical body 122 is mounted, and a movable pawl 128 for holding an upper portion of the spherical body 122. A recessed portion corresponding to a spherical surface of the spherical body 122 is formed at a central portion of the mount portion 126 and the spherical body 122 is retained by the recessed portion under normal conditions. The movable pawl 128 is pivoted by a standing wall portion extending upward from the mount portion 126 to be able to turn up and down to hold and retain the spherical body 122 from above. Therefore, under rapid deceleration, the spherical body 122 rolls from the recessed portion in the mount portion 126 to thereby push the movable pawl 128 upward.

Above the acceleration sensor 122, the gear sensor 110 basically formed in a plate shape is disposed coaxially with the pinion 66. To a lower portion of the gear sensor 110, an engaging pawl 110A which faces the movable pawl 128 of the above-described acceleration sensor 122 and which can be engaged with the movable pawl 128 is mounted. The engaging pawl 110A is pivoted in a position eccentric from an axial center portion of the gear sensor 110 to be able to rotate about an axis parallel to the axis of the gear sensor 110. To the gear sensor 110, one end of a spring 118 is coupled. The other end of the spring 118 is fixed to an inner wall of the sensor cover 108.

Above the turning direction of the engaging pawl 110A of the gear sensor 110, ratchet teeth 117 of the V gear 116 are positioned. The V gear 116 is disposed coaxially with the pinion 66. The ratchet teeth 117 can be engaged with the engaging pawl 110A of the gear sensor 110.

Between the gear sensor 110 and the V gear 116, the W mass 112 and the W pawl 114 are disposed in that order from the gear sensor 110 toward the V gear 116. To the W pawl 114, one end of the sensor spring 120 is coupled. The other end of the sensor spring 120 is fixed to an inner wall of the sensor cover 108. As a result, if the W pawl 114 turns in a predetermined direction together with the V gear 116 and the gear sensor 110, the W pawl 114 is biased by the sensor spring 120 in a reverse direction to this turning direction.

At a lower portion of the above-described gear sensor 110 on the side of the leg portion 18, a pressing piece 110B protruding toward the leg portion 18 is formed.

Above the pressing piece 110B in the turning direction (the substantially webbing pulling-out direction), a lock plate 136 is disposed. The lock plate 136 is provided with a lock tooth 138. The lock plate 136 is pivoted in a position eccentric from an axial center of the above-described lock gear 70 on the leg portions 16, 18 to be able to turn about an axis parallel to an axis of the lock gear 70. In the turning direction of the lock plate 136 (the substantially webbing pulling-out direction), the above-described ratchet teeth 76 of the lock gear 70 are disposed. The lock plate 136 is pressed by the pressing piece 110B of the gear sensor 110 to thereby turn the ratchet teeth 76 and the lock tooth 138 of the lock plate 136 is engaged with the ratchet teeth 76 of the lock gear 70.

Next, operation of the embodiment of the invention will be described.

An occupant holds a tongue plate (not shown) inserted through the webbing belt 28 and pulls the webbing belt 28 out of the spool 20 against a biasing force of the spiral spring 38. Then, the occupant engages the tongue plate with a buckle device (not shown) to thereby wear the belt 28 of a seatbelt apparatus (not shown).

During normal traveling of the vehicle, the torsion bar 30 rotates in the webbing pulling-out direction and the webbing retracting direction together with the spool 20.

If the vehicle decelerates abruptly when the belt is worn and during traveling of the vehicle, the pretensioner mechanism 50 and the lock mechanism 130 are actuated.

When the pretensioner mechanism 50 is actuated, gas is generated from the gas generator 56 and the piston 58 is pressed by this gas and extends from the cylinder 52 (i.e., the piston 58 is pushed upward with respect to the retractor). As a result, the shear pin (not shown) used for positioning of the pinion 66 and the clutch plate 84 shears. In synchronization with this shear, the rack teeth 60 of the rack 59 provided to the piston 58 and the pinion teeth 66B of the pinion 66 are engaged with teach other and the pinion 66 rotates in the webbing retracting direction by an amount corresponding to a movement stroke of the piston 58. As a result, the rising portions 84B of the clutch plate 84 are pressed by the cam 66C formed integrally with the base portion 66A of the pinion 66 and is moved toward the knurled face 82 of the sleeve extension portion 73. As a result, protrusions formed on the rising portions 84B are engaged with the knurled face 82 (the clutch plate 84 is actuated) to actuate the clutch. Therefore, in this state, the rotating force of the pinion 66 is transferred to the lock gear 70 (more specifically to the sleeve extension portion 73 of the lock gear 70) through the clutch plate 84. Therefore, the pinion 66 rotates in the webbing retracting direction and thus the lock gear 70 also rotates in the webbing retracting direction. As a result, the spool 20 is instantaneously rotated in the webbing retracting direction. In this way, the webbing belt 28 is forcibly retracted by a predetermined amount and is brought into close contact with a body of the occupant.

If the lock mechanism 130 is actuated simultaneously with the pretensioner mechanism 50, the spherical body 124 of the acceleration sensor 122 rolls from the recessed portion in the mount portion 126 in the lock mechanism 130. If the spherical body 124 rolls from the recessed portion in the mount portion 126, the movable pawl 128 is pushed up by the spherical body 124 to press and turn the engaging pawl 110A attached to the gear sensor 110.

If the engaging pawl 110A of the gear sensor 110 is turned, the engaging pawl 110A is engaged with the ratchet teeth 117 of the V gear 116. If the engaging pawl 110A of the gear sensor 110 is engaged with the ratchet teeth 117 of the V gear 116, the V gear 116 and the gear sensor 110 are brought into a coupled state and therefore the gear sensor 110 rotates to some extent with the V gear 116 as the webbing belt 28 is pulled by the inertia of the body of the occupant under rapid deceleration of the vehicle. In this case, the rotating forces of the V gear 116 and the gear sensor 110 are suppressed by predetermined amounts by the inertia of the W mass 112.

If the gear sensor 110 rotates, the lock plate 136 is flipped up by the pressing piece 110B of the gear sensor 110. If the lock plate 136 is flipped up, the lock tooth 138 of the lock plate 136 is engaged with the ratchet teeth 76 of the gear lock 70. If the lock tooth 138 of the lock plate 136 is engaged with the ratchet teeth 76 of the gear lock 70, rotation of the gear lock 70 in the webbing pulling-out direction is prevented and rotation of the head portion 30A of the torsion bar 30 coupled to the lock gear 70 is also prevented. If the rotation of the head portion 30A of the torsion bar 30 is prevented, rotation of the spool 20 engaged with the tail portion 30B of the torsion bar 30 in the webbing pulling-out direction is also prevented. As a result, the webbing belt 28 is also prevented from being pulled out and the occupant is protected while restrained in close contact by the webbing belt 28.

In a state in which the rotation of the spool 20 in the webbing pulling-out direction is prevented by the lock mechanism 130, if tension (webbing tension) is applied to the webbing belt 28 as the occupant inertia-moves toward a front side of the vehicle, a rotating force in the webbing pulling-out direction is applied to the spool 20. Therefore, the spool 20 trying to rotate in the webbing pulling-out direction and the lock gear 70 the rotation in the webbing pulling-out direction of which is prevented rotate with respect to each other. In this case, the torsion bar 30 is twisted to absorb a predetermined amount of rotating force in the webbing pulling-out direction by the above-described webbing tension. In this way, it is possible to obtain perfect performance for protecting the occupant and to further improve the performance.

In the present webbing retractor 10, the sleeve 72 and the sleeve extension portion 73 forming the pretensioner mechanism 50 are formed integrally with the axial center portion of the lock gear 70 of the lock mechanism 130. In this manner, in the webbing retractor 10, a lock gear (corresponding to the lock gear main body 74 and the ratchet teeth 76 in the embodiment) of a clutch mechanism and a sleeve (corresponding to the sleeve 72 and the sleeve extension portion 73 in the embodiment) of a pretensioner mechanism which have been separate members in prior art are formed integrally and therefore one member can have two functions. As a result, it is possible to suppress the number of parts of the webbing retractor 10. Since the number of parts of the webbing retractor 10 can be suppressed, it is possible to miniaturize the webbing retractor 10.

In the present webbing retractor 10, as described above, the sleeve extension portion 73 has the knurled face 82. Therefore, without using an additional engaging member for engaging the clutch plate 84 with the sleeve extension portion 73, the sleeve extension portion 73 can be engaged by itself. As a result, the number of parts of the webbing retractor 10 can be suppressed to thereby miniaturize the webbing retractor 10 and increase comfort.

As described above, the present webbing retractor 10 includes the cam 66C for actuating the clutch plate 84 based on the rotation of the pinion 66 (more specifically, the pinion teeth 66B of the pinion 66) which is integrally with the pinion 66 (more specifically, the base portion 66A formed integrally with the pinion teeth 66). Therefore, without using an additional member for transferring the rotating force of the pinion 66 to the clutch plate 84, the rotating force of the pinion 66 can directly be transferred to the clutch plate 84. As a result of this point, too, the number of parts of the webbing retractor 10 can be suppressed to thereby advantageously miniaturize the webbing retractor 10.

In the webbing retractor according to the invention, the sleeve may be formed in a cylindrical shape coaxial with the lock gear and an inner peripheral face of the sleeve may be knurled.

In such a webbing retractor, the inner peripheral face of the sleeve may be knurled. As a result, if a rotating force transferring member for transferring the rotating force to the sleeve is engaged with the sleeve, for example, the sleeve can be engaged by itself without using an additional engaging member for engaging the rotating force transferring member with the sleeve. Therefore, the number of parts of the webbing retractor can be suppressed to thereby miniaturize the webbing retractor and increase comfort.

The webbing retractor according to this different aspect of the invention may include a cam formed integrally with the pinion to actuate the clutch plate based on the rotation of the pinion.

The webbing retractor of the invention includes the cam for actuating the clutch plate based on the rotation of the pinion, which is integrally with the pinion. Therefore, without using an additional member for transferring the rotating force of the pinion to the clutch plate, the rotating force of the pinion can be transferred to the clutch plate. As a result the number of parts of the webbing retractor can be suppressed to thereby advantageously miniaturize the webbing retractor.

### Brief Description of the Drawings

FIG. 1 is a schematic exploded perspective view of a webbing retractor according to an embodiment of the present invention.
FIG 2 is an exploded perspective view of a clutch mechanism forming a pretensioner mechanism according to the embodiment of the invention.
FIG. 3 is a sectional view of a state in which the clutch mechanism in FIG 2 is assembled.

### Explanation of the Reference Numerals

- 10: Webbing retractor
- 20: Spool (retracting shaft)
- 28: Webbing belt
- 30: Torsion bar (force limiter mechanism)
- 50: Pretensioner mechanism
- 58: Piston
- 59: Rack
- 66A: Base portion (pinion)
- 66B: Pinion teeth (pinion)
- 66C: Cam
- 70: Lock gear
- 72: Sleeve
- 73: Sleeve extension portion (sleeve)
- 76: Ratchet teeth
- 82: Knurled face (knurled inner peripheral face of sleeve)
- 84: Clutch plate
- 130: Lock mechanism (lock mechanism)
- 136: Lock plate

## Claims

1. A webbing retractor comprising:
a retracting shaft for retracting a webbing belt for restraining an occupant;
a lock mechanism which includes a lock gear with ratchet teeth being formed at an outer peripheral face of the lock gear and a lock plate disposed to be able to be engaged with the ratchet teeth of the lock gear, and which is structured to be able to prevent rotation of the retracting shaft in a webbing pulling-out direction by the lock plate being engaged with the lock gear;
a force limiter mechanism which includes a torsion bar having one end portion coupled to the retracting shaft, and which is structured to be able to absorb a rotating force of the retracting shaft in the webbing pulling-out direction when the rotation of the retracting shaft in the webbing pulling-out direction is prevented by the lock mechanism; and
a pretensioner mechanism which includes a sleeve coupled to the other end portion of the torsion bar, and which is structured to be able to forcibly rotate the retracting shaft in a webbing retracting direction via the sleeve,
wherein the sleeve of the pretensioner mechanism is provided integrally at an axial center portion of the lock gear of the lock mechanism.

2. The webbing retractor of claim 1, wherein the sleeve is formed in a cylindrical shape coaxial with the lock gear, and an inner peripheral face of the sleeve is knurled.

3. A webbing retractor comprising:
a retracting shaft for retracting a webbing belt for restraining an occupant;
a lock mechanism which includes a lock gear with ratchet teeth being formed at an outer peripheral face of the lock gear and a lock plate disposed to be able to be engaged with the ratchet teeth of the lock gear, and which is structured to be able to prevent rotation of the retracting shaft in a webbing pulling-out direction by the lock plate being engaged with the lock gear;
a force limiter mechanism which includes a torsion bar having one end portion coupled to the retracting shaft, and which is structured to be able to absorb a rotating force of the retracting shaft in the webbing pulling-out direction when the rotation of the retracting shaft in the webbing pulling-out direction is prevented by the lock mechanism; and
a pretensioner mechanism which includes a sleeve coupled to the other end portion of the torsion bar, a piston which moves within a cylinder by receiving gas pressure, a rack, which is provided at the piston, with a plurality of teeth being formed at the rack along a moving direction of the piston, a pinion which is disposed coaxially with the retracting shaft and which engages with the teeth of the rack to rotate as the piston moves, and a clutch plate which transmits a rotating force of the pinion to the sleeve, and which is structured to be able to forcibly rotate the retracting shaft in a webbing retracting direction via the sleeve,
wherein the sleeve of the pretensioner mechanism is provided integrally at an axial center portion of the lock gear of the lock mechanism.

4. The webbing retractor of claim 3, further comprising a cam which is formed integrally with the pinion and which actuates the clutch plate based on rotation of the pinion.
